# EUROPÄISCHE PATENTSCHRIFT

(11) **EP 0 864 847 B1**
(45) Veröffentlichungstag und Bekanntmachung des Hinweises auf die Patenterteilung: **28.12.2005**
(21) Anmeldenummer: 98103890.4
(22) Anmeldetag: 05.03.1998
(51) Int. Cl.: G01B 11/30, G01B 11/24, B21B 38/02

(54) **Verfahren zum Messen der Planheit eines bewegten Metallbands oder der Stirnfläche eines Coils**
Method of measuring the flatness of a moving metal sheet or of the front side of a coil
Procédé de mesure de la planéité d'une bande métallique en mouvement ou de la surface frontale d'une bobine

(30) Priorität: 11.03.1997 DE 19709992
(43) Veröffentlichungstag der Anmeldung: 16.09.1998
(60) Teilanmeldung: 04002747.6
(73) Patentinhaber: Betriebsforschungsinstitut VDEh, Institut für angewandte Forschung GmbH, 40237 Düsseldorf (DE); ThyssenKrupp Stahl AG, 47166 Duisburg (DE)
(72) Erfinder: Müller, Ulrich, Dr., D-40789 Monheim (DE); Peuker, Gustav, 41066 Mönchengladbach (DE); Sonnenschein, Detlev, 45149 Essen (DE); Winter, Detlef, Dr., 38527 Meine (DE); Degner, Michael, Dr.-Ing., 44229 Dortmund (DE); Thiemann, Gerd, Dipl.-Ing., 44879 Bochum (DE)
(74) Vertreter: König, Reimar

(56) Entgegenhaltungen:
- DE-A- 2 013 867
- DE-A- 3 721 746
- FR-A- 2 725 512
- US-A- 5 309 222
- US-A- 5 367 378

## Beschreibung

Die Erfindung betrifft ein Verfahren zum Messen der Planheit eines bewegten Metallbands oder der Stirnfläche eines Coils.

Das bei Kaltbandstraßen übliche Kontaktmessen ist im Warmbandbereich aufgrund der hohen Temperatur des Bandes - von etwa 1000°C - nur mit erheblichem Instandhaltungsaufwand möglich. Ein Kontaktmessen ist auch an den Stirnflächen eines in einem Haspel entstehenden Coils nicht möglich. Es ist daher schwierig, wenn nicht gar unmöglich, Band so zu haspeln, daß im Coil jede Windung exakt über der vorausgehenden liegt und sich so plane Stirnflächen ergeben. Aber auch in Kaltbandstraßen wird versucht, das Kontaktmessen zu vermeiden, da die mechanischen Meßelemente nur eine begrenzte Lebensdauer besitzen.

Auch die Bandplanheit wird daher vorzugsweise berührungslos gemessen. Bekannt ist beispielsweise ein messen von Planheitsabweichungen mit Hilfe von au das Band projizierten Lichtpunkten. Die Raumlage des vorzugsweise mit Hilfe eines Laserstrahls auf der Bandoberfläche erzeugten Lichtpunkts wird mit einem Abstandssensor erfaßt.

Die beiden ebenen Ortskoordinaten eines bestimmten Oberflächenpunktes sind durch die relative Lage zwischen Abtast- und Beleuchtungsstrahl und der Bandoberfläche bekannt. Die Höhenkoordinate des Oberflächenpunktes, der aktuell vermessen wird, erfaßt ein ortsempfindlicher Detektor. Mit der Höhenkoordinate verändert sich gleichzeitig die Position des Abbildungspunktes auf dem Sensor.

Mit mehreren Strahlenquellen und Sensoren läßt sich so ein Planheitsbild über die gesamte Breite des Bandes erstellen, das sich aus den Meßergebnissen der in bestimmten Abständen auf das Band projizierten Lichtpunkte zusammensetzt. Die zwischen den Lichtpunkten befindlichen Bereiche werden allerdings bei diesem Verfahren nicht erfaßt und bilden bei einem fortlaufenden Band streifenförmige Meßlücken, deren Planheit nicht ermittelt wird. Darüber hinaus kommt es dadurch zu Meßfehlern, daß beispielsweise ein Flattern des Bandes meßtechnisch als Bandunebenheit erfaßt wird.

In der Automobilindustrie ist es bekannt, kleinere Oberflächen mit Hilfe der Moiré-Technik zu vermessen. Dabei wird auf der Objektoberfläche ein Interferenzmuster mittels einer Lichtquelle erzeugt. Mit Hilfe einer CCD-Kamera (CCD = Charge-coupled-device) wird das Interferenzmuster erfaßt. Die Kamera ist so angeordnet, daß sich ein Winkel zwischen der Lichtquelle der Oberfläche und der Kamera ergibt. Durch ein Referenzraster in der Bildebene entsteht durch Überlagerung des aufgenommenen Musters mit dem Referenzmuster ein sogenannter Moire-Effekt. Aus den Moiré-Linien lassen sich die Höhendifferenzen quantitativ ermitteln.

Die Moiré-Technik liefert genauere Meßergebnisse als das Messen mit Lichtpunkten; sie erfaßt darüber hinaus im wesentlichen die gesamte Meßfläche und vermeidet die oben erwähnten Meßlücken. Der Einsatz, insbesondere in einer Warmbandstraße ist jedoch problematisch.

Um die Höhendifferenzen des Walzbandes quantitativ zu ermitteln, ist eine komplizierte Umrechnung der von der Kamera erfaßten Muster erforderlich. Die als Moiré-Linien abgebildeten Höhendifferenzen lassen sich nicht in Echtzeit in quantitative Meßwerte umrechnen.

In einer Walzstraße sind aber gerade schnelle Meßergebnisse erforderlich, da die Messung sich sonst kaum für ein direktes Anpassen der Walzparameter zur Verbesserung der Planheit des durchlaufenden Bandes ausnutzen läßt.

Für den industriellen Einsatz mangelt es darüber hinaus den feinen Interferenzmustern an Kontrast- und Intensitätsstärke.

Bei herkömmlichen Metallbandstraßen, bei denen die Bandplanheit nach einem der oben erwähnten Verfahren erfaßt wird, findet keine Erfassung der Planheitsfehler aus der Kühlstrecke statt, was erhebliche Qualitätsverluste zur Folge haben kann.

Aus FR 2 725 512 A1 ist ein Verfahren zum Messen der Planheit eines bewegten Bandes bekannt, bei dem eine Lichtquelle einen einzigen, breiten Lichtstreifen auf der Meßoberfläche erzeugt und eine Kamera den Verlauf des Randes dieses Lichtstreifens, also den Übergang von hell auf dunkel, aufnimmt. Aus dem Verlauf dieses Hell/Dunkel-Übergangs wird in FR 2 725 512 A1 die Bandplanheit ermittelt.

US 5,367,378 betrifft das Messen stationärer Meßoberflächen. Zur Ermittlung des Oberflächenverlaufs der stationären Meßoberfläche werden Linien auf die Meßoberfläche projiziert. Um eine Aussage über den Oberflächenverlauf geben zu können, müssen mehrere Fotoaufnahmen durchgeführt werden, aus denen ein Rechenverfahren den Oberflächenverlauf analysiert.

Aus der US-Patentschrift 5,488,478 ist eine Vorrichtung zur Oberflächenmessung eines Metallbands bekannt, bei der mit Hilfe eines Laserstrahls Linien auf der Metalloberfläche erzeugt werden, die von mehreren Line-Scan-Kameras erfaßt unter Vergleichen mit einem Referenzmuster zur Abstimmung der Oberflächengeometrie ausgewertet werden. Diese Vorrichtung erfordert einen erheblichen Konstruktionsaufwand und erlaubt darüber hinaus nur eine grobe Teilaussage über die Oberflächengeometrie des Bandes. Darüber hinaus sind der Betriebsgeschwindigkeit dieses Systems aufgrund des rotierenden Spiegels zur Erzeugung der Laserlinien Grenzen gesetzt. Der Erfindung liegt das Problem zugrunde, ein Verfahren zu schaffen, das eine Verbesserung der Bandqualität durch ein einfaches und effektives Erfassen der Bandplanheit erlaubt und eine feinfühlige Regelung der Walz- und/oder Haspelparameter zuläßt.

Das Problem wird dadurch gelöst, daß auf der Meßoberfläche und/oder der Stirnfläche eines im Entstehen begriffenen Coils ein Linienmuster erzeugt, das Linienmuster mit einer das Linienmuster auflösenden Kamera erfaßt und die erfaßten Meßdaten mit einer Referenzmessung verglichen werden. Mit Hilfe eines Prozeßrechners werden die Meßergebnisse unmittelbar in Steuerungsparameter für die Fertigstraße und den Haspel umgesetzt und koordiniert.

Unter Meßoberfläche ist hier die Oberfläche des Bandes oder die aus einer mehr oder minder großen Zahl von Windungen des Bandes bestehende Stirnfläche eines Coils beim Haspeln zu verstehen.

Ein Projektor erzeugt durch Projektionen durch ein Dia ein der Auflösung der Kamera entsprechendes Linienmuster auf der Bandoberfläche bzw. der Stirnfläche des Coils. Der Projektor ist dabei oberhalb des Metallbandes angeordnet und projiziert das Linienmuster in einem Winkel zur Vertikalen auf die Oberfläche des Metallbandes, so daß sich die Linien vorzugsweise quer zur Bandoberfläche erstrecken und somit die ganze Bandbreite erfassen.

Eine CCD-Kamera mit einer Auflösung von beispielsweise acht Pixel pro Linie erfaßt die quer über die Bandoberfläche verlaufenden Linien. Bei einer absoluten Bandplanheit entsteht ein gleichmäßiges Muster gerader Linien mit unverändertem Linienabstand.

Abweichungen der Bandoberfläche von der idealen Ebene bewirken eine Änderung des Linienabstandes im Bereich der Unebenheit. Diese Änderung erfaßt die Kamera. Sie läßt sich rechnerisch durch einen Vergleich mit einem Idealmuster auf einfache Weise in Höhendifferenzen umrechnen.

In ähnlicher Weise wie beim Planheitsmessen am laufenden Band, läßt sich mit Hilfe des erfindungsgemäßen Meßsystems die Planheit der Stirnflächen beim Haspeln überwachen bzw. gewährleisten. Die Stirnfläche des sich im Haspel aufbauenden Coils entspricht dabei der Bandoberfläche.

Das erfindungsgemäße System ermöglicht eine schnelle Ermittlung der tatsächlichen Höhendifferenzen der Bandoberfläche und erlaubt so eine Echtzeiterfassung fortlaufender Bandabschnitte. Dies hat den Vorteil, daß die Meßergebnisse ein Anpassen der Walzparameter unmittelbar nach dem Auftreten einer Unebenheit erlauben.

Die Erfindung ermöglicht eine Messung, die unempfindlich ist gegen Verfälschungen der Meßergebnisse. Solche Verfälschungen entstehen bei herkömmlichen Meßsystemen beispielsweise infolge einer Bewegung der gesamten Bandoberfläche bezüglich der Höhenkoordinate (Flattern). Die Erfindung erlaubt darüber hinaus, die Querwölbung des Bandes zu bestimmen. Konventionelle Meßsysteme erfassen lediglich die Bandfaserlänge. Die Meßlinien lassen sich zudem bezüglich ihrer Intensität und Liniendicke unterschiedlichen Bedingungen anpassen. Die Probleme der feinen intensitäts- und kontrastschwachen Moiré-Linien treten nicht auf.

Das erfindungsgemäße System eignet sich besonders für ein Messen am aus der Fertigstaffel auslaufenden Metallband in Verbindung mit einer Messung des Bandes am Haspel. Durch diese Anordnung können Veränderungen der Bandplanheit infolge des Bandabkühlens zwischen Fertigstaffel und Haspel erfaßt und zur Planheitsregelung verwertet werden.

Die Meßdaten lassen sich zur Regelung der Fertigstaffel, des Haspels und zur Steuerung der Kühlstrecke verwerten.

Meßergebnisse, die eine Sollwertabweichung beinhalten, bewirken eine sofortige und aufeinander abgestimmte Anpassung der Parameter für die Fertigstaffel, die Kühlstrecke und den Haspel.

Das erfindungsgemäße System läßt sich neben der Planheitsmessung in einer Fertigstraße auch in nachgeschalteten Produktionslinien wie zum Beispiel bei der Regelung von Streckrichtanlagen und in Beizlinien einsetzen.

Im folgenden wird die Erfindung anhand eines in der Zeichnung dargestellten Ausführungsbeispiels des näheren erläutert.

In der Zeichnung zeigen:

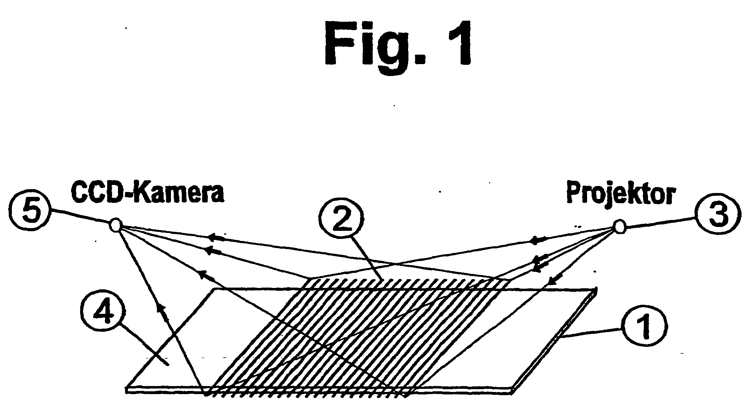

- Fig. 1:: die Erzeugung und Erfassung der Meßlinien auf einem Bandabschnitt;

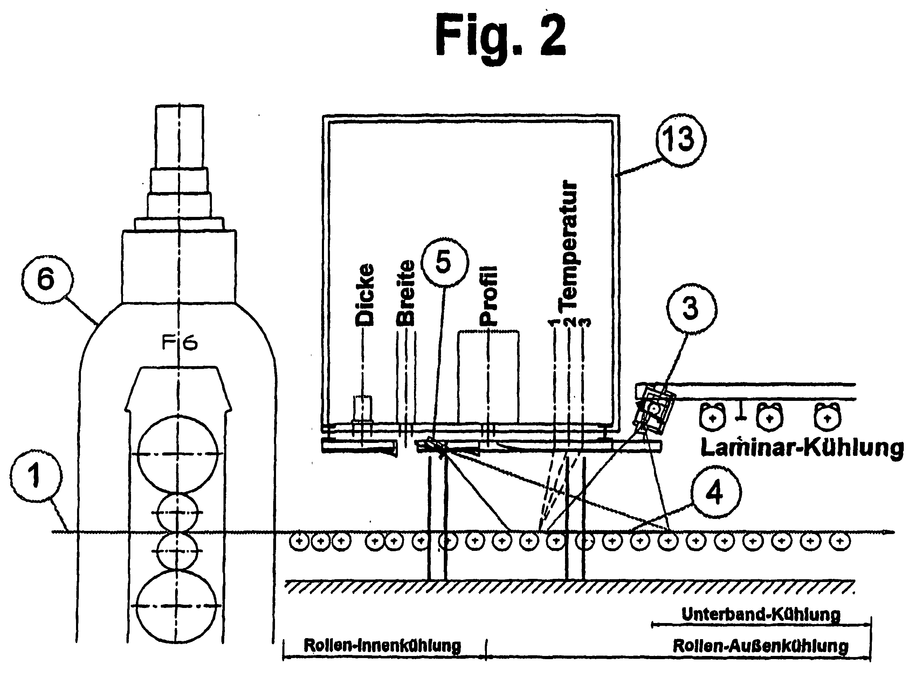

- Fig. 2:: die Anordnung eines Projektors und einer Kamera hinter einer Fertigstaffel;

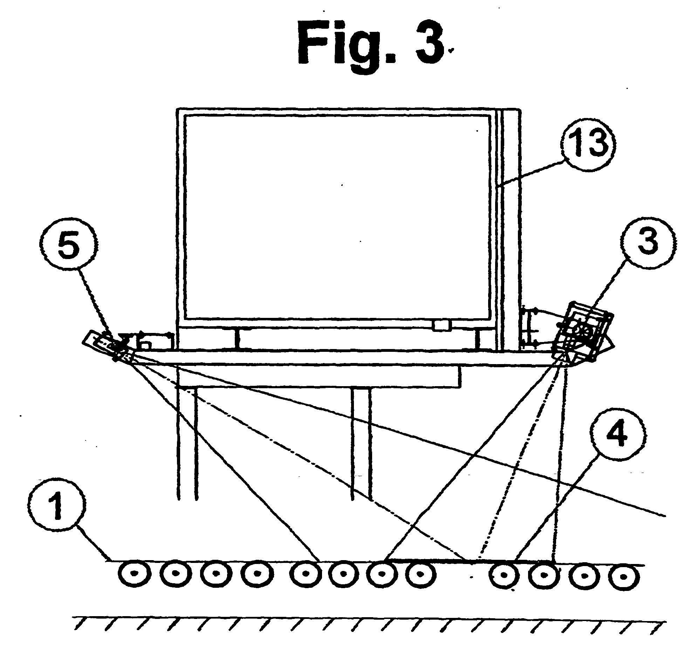

- Fig. 3:: die Anordnung des Projektors und der Kamera vor einer Haspelgrube;
- Fig. 4:: ein Blockdiagramm der Planheitsregelung.

Quer zum Band 1 verlaufende Meßlinien 2 werden durch einen Projektor 3 auf der Meß- bzw. Bandoberfläche 4 erzeugt.

Die Meßanordnung ist im Auslauf der Fertigstaffel 6 einerseits und vor dem Haspel 7 andererseits an einem Meßhaus 13 angeordnet. Die CCD-Kamera 5 befindet sich auf der dem Haspel 7 abgewandten Meßhausseite in einem wassergekühlten Gehäuse. Der Projektor 3 ist auf der dem Haspel 7 zugewandten Meßhausseite angeordnet. Zur Wärmeabfuhr wird das Gehäuse mit Kühlluft beaufschlagt. Die Kühlung des Projektors 3 und der Kamera 5 ist zum Abführen der Eigenwärme und der von dem etwa 1000°C heißen Band 1 ausgehenden Wärmestrahlung erforderlich.

Die bezüglich der Bandlaufrichtung hintereinander angeordnete Kamera 5 und der Projektor 3 sind auf einen zwischen ihnen befindlichen Bandbereich ausgerichtet, auf dem das Linienmuster erzeugt und abgetastet wird. Als Projektor läßt sich beispielsweise eine Xenon-Lichtquelle einsetzen, die auch auf einer heißen Bramme ein gut lesbares Linienmuster erzeugt.

Unebenheiten auf der Bandoberfläche 4 bewirken einen unregelmäßigen Verlauf der Meßlinien 2 bzw. deren Abweichung von der geometrischen Geraden.

Mit einer CCD-Kamera 5 werden die Meßlinien 2 und damit auch deren durch Unebenheiten veränderter Verlauf erfaßt. Das Meßbild wird nach der Erfassung rechnerisch mit einem zuvor aufgenommenen Referenzmuster verglichen. Aus den Abweichungen ergeben sich unmittelbar die Höhendifferenzen und die Parameter für die Regelung der Fertigstraße.

Dadurch entsteht ein vollständiges Planheitsbild des sich in Pfeilrichtung bewegenden Bandes 1.

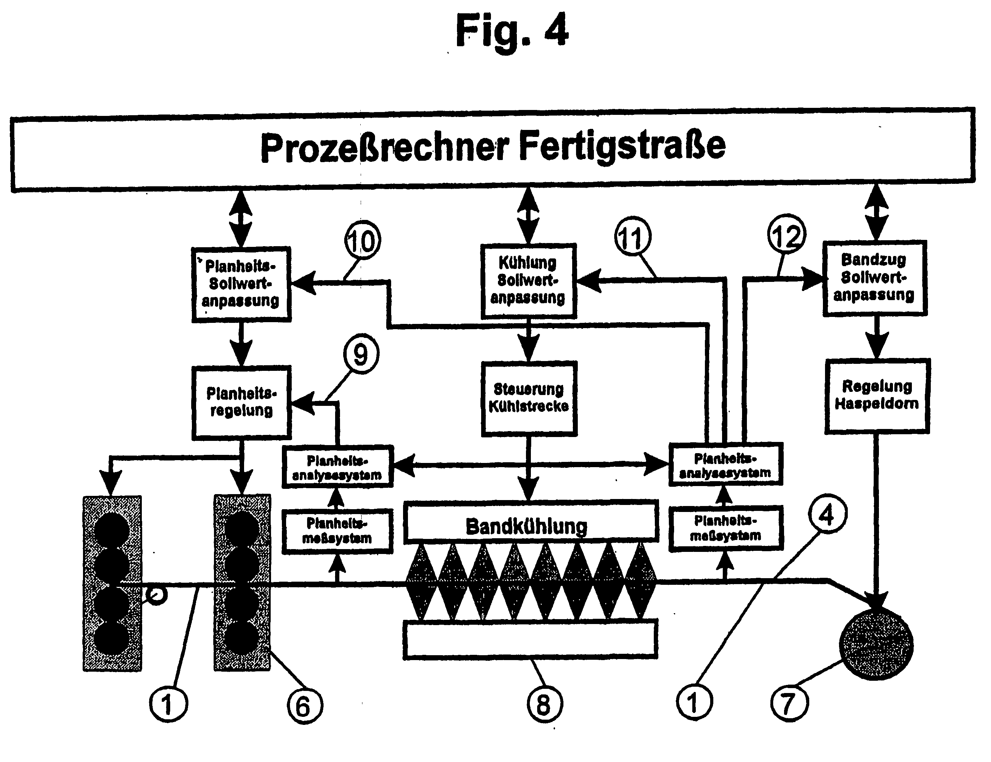

Aus dem Diagramm der Planheitsregelung (Fig. 4) ergibt sich der erfindungsgemäße Aufbau. Das Warmband 1 durchläuft die Fertigstraße 6 und die Bandkühlung 8 bis zum Haspel 7 in der Haspelgrube. Im Auslauf der Fertigstraße 6 wird die Planheit des Warmbandes erfaßt, analysiert und zur Ansteuerung der letzten Gerüste der Fertigstaffel (Walzenbiegung und Schwenken) verwertet. Diese innere Planheits-Regelschleife 9 wird durch eine äußere Planheits-Regelschleife 10 ergänzt. Durch eine Messung der Bandplanheit hinter der Bandkühlung 8 vor dem Haspel 7 wird die äußere Planheits-Regelschleife 10 zur Anpassung des Sollwertes der inneren Regelschleife aufgebaut.

Mit den hinter der Bandkühlung erfaßten Meßwerten wird ferner eine erste unterlagerte Regelschleife 11 erzeugt, die eine Anpassung des Sollwertes für die Kühlstrecke 8 erlaubt, und eine zweite unterlagerte Regelschleife 12, die eine Anpassung des Sollwertes für den Haspelzug 7 erlaubt, aufgebaut.

Insgesamt läßt sich die erfindungsgemäße Erfassung und Regelung beim Warmwalzen effektiv verwenden, um eine hohe Bandplanheit bei den in Warmbandstraßen üblichen hohen Fertigungsgeschwindigkeiten bis 25 m/s zu erreichen.

## Patentansprüche

1. Verfahren zum Messen der Planheit eines bewegten Metallbands oder der Stirnfläche des Coils beim Haspeln von Metallband, bei dem
- mit einem Projektor (3) durch Projektion durch ein Dia ein Linienmuster (2) auf der Messoberfläche (4) erzeugt wird und
- direkt von einer Kamera (5) erfasst wird.

2. Verfahren nach Anspruch 1, **dadurch gekennzeichnet, dass** das Linienmuster (2) nach der Erfassung durch die Kamera (5) rechnerisch mit einem Referenzmuster verglichen wird.

3. Verfahren nach Anspruch 1 oder 2, **dadurch gekennzeichnet, dass** die Messwerte zur Steuerung einer Fertigstraße verwendet werden.

## Claims

1. Method of measuring the evenness of a moving metal strip or of the end-face of the coil when metal strip is being coiled, in which
- a pattern of lines (2) is produced on the surface to be measured (4) by a projector (3) by projection through a transparency and
- is sensed directly by a camera (5).

2. Method according to claim 1, **characterised in that**, after the sensing by the camera (5), the pattern of lines (2) is compared with a reference pattern by computation.

3. Method according to claim 1 or 2, **characterised in that** the measured values are used to control a finishing train.

## Revendications

1. Procédé de mesure de la planéité d'une bande métallique en mouvement ou de la surface frontale d'une bobine lors du bobinage d'une bande métallique, dans lequel
- un motif de lignes (2) est généré avec un projecteur (3) par projection à travers une diapositive sur la surface de mesure (4) et
- saisi directement par une caméra (5).

2. Procédé selon la revendication 1, **caractérisé par le fait que** le motif de lignes (2), après la saisie par la caméra (5), est comparé par calcul avec un motif de référence.

3. Procédé selon la revendication 1 ou 2, **caractérisé par le fait que** les valeurs mesurées sont utilisées pour commander un train finisseur.
